# EUROPEAN PATENT SPECIFICATION

(11) **EP 0 881 743 B1**
(45) Date of publication and mention of the grant of the patent: **28.07.2004**
(21) Application number: 98109575.5
(22) Date of filing: 26.05.1998
(51) Int. Cl.: H02K 3/02, H02K 3/44, H02K 3/24, H02K 3/12, H02K 9/06, H02K 5/20, H02K 19/22

(54) **AC generator for vehicles**
Wechselstromgenerator für Kraftfahrzeuge
Alternateur pour véhicules automobiles

(30) Priority: 26.05.1997 WO PCT/JP97/01778; 22.09.1997 WO PCT/JP97/03374; 26.09.1997 JP 27975097; 26.09.1997 JP 27975197; 26.09.1997 JP 27975297; 14.10.1997 JP 29788297; 24.10.1997 JP 30973197; 10.02.1998 JP 4439098
(43) Date of publication of application: 02.12.1998
(73) Proprietor: Denso Corporation, Kariya-city, Aichi-pref., 448-8661 (JP)
(72) Inventor: Umeda, Atsushi, Kariya-city, Aichi-pref., 448-8661 (JP); Shiga, Tsutomu, Kariya-city, Aichi-pref., 448-8661 (JP); Kusase, Shin, Kariya-city, Aichi-pref., 448-8661 (JP)
(74) Representative: Winter, Brandl, Fürniss, Hübner, Röss, Kaiser, Polte Partnerschaft

(56) References cited:
- US-A- 3 749 950
- PATENT ABSTRACTS OF JAPAN vol. 016, no. 018 (E-1155), 17 January 1992 & JP 03 235644 A (HITACHI LTD;OTHERS: 01), 21 October 1991
- F. YEAPLE: "New designs for aluminum motors include fool-proof connectors" PRODUCT ENGINEERING, vol. 45, no. 12, December 1974, pages 19-22, XP002086191

## Description

### BACKGROUND OF THE INVENTION

### 1. Field of the Invention

The present invention relates to an AC generator for vehicles mounted on cars, trucks and the like.

### 2. Description of the Related Art

Recently, the engine and the whole electric appliances come close to the road surface due to the slant nosing for reducing the vehicle running resistance and improving the visibility, and the water-splashing conditions caused by splashing water from tires during the running have been severe. Further, in cold districts, a large amount of salts such as calcium chloride and sodium chloride are scattered for the purpose of preventing the road from freezing in winter and the salts stay on the road surface as electrolytic solutions, which are dragged in during the running, resulting in a harsher corrosive environment of the engine. Since the vehicular generator mounted on the engine is exposed to the harsh environment as described above, an inconvenience of corrosion caused by water-splashing and salts sometimes occurs.

On the other hand, with the tendency towards a narrower engine room, there is no room for a mounting space for the vehicular generator. Further, reduction in weight for improving fuel cost and enhancement of generation performance resulting from an increase in such electric loads as safety control apparatus and so on have been demanded. Needless to say, lower cost is demanded.

That is, an AC generator for vehicles which is excellent in resistance to corrosion, small in size, light in weight, and low in cost has been necessary. In this case, the stoppage of the generation of the electrical energy due to corrosion is mainly caused by the fact that in the step of mounting a stator coil into a slot of a stator core, an insulating film on the surface of the stator coil is damaged by mechanical friction or the like, and when particularly salt water which is an electrolytic solution, is splashed on the damaged portion, it reacts with copper that is an electric conductor of the coil to produce a conductive compound. When this reaction progresses, separation between the film and the copper is further accelerated, a short-circuit between the stator core and the coil and between the coils occurs, resulting in lowering of output and local rapid heat generation, finally leading to a breakage of the stator coil.

For solving the problem, it has been suggested that the film of the stator coil be increased in thickness, and the damage resistance be improved. Further, in the impregnation process by way of resin generally carried out for the resistance to vibration and the environmental effect after the stator coil has been wound, a thick coating of impregnated resin is generally used. Further, as disclosed in Japanese Patent Application Laid-Open No. Hei 3-235644, a drip proof cover is mounted on the cooling air intake side to cut off a path for water entering directly from the outside.

When the film of the stator coil is increased in thickness, not only the material cost of the film increases but also the number of coatings of the film increases. Therefore, the number of fabrication steps of the coil material increases so that the cost of the stator coil considerably increases. Further, since the occupied area ratio in the slot increases by the portion in which the film becomes thick, the incidence of damage of the film when the stator coil is inserted and mounted increases, failing to improve the anti-corrosion performance as desired. Further, if the film is increased in thickness to provide the same space factor, the sectional area of copper becomes narrow so that the electric resistance value of the stator coil rises, thus lowering the output. There are also problems of a rise in temperature resulting from deterioration of heat radiation of the stator coil itself, and the lowering of output therefrom. When the area of the slot is enlarged so as to provide the same space factor in order to compensate for the lowering of output, the physique cannot but increase in order to secure a magnetic path section in each part of the stator core in terms of the magnetic circuit, which cannot attain the demand for miniaturization.

It is needless to say that when a film excellent in resistance to damage is provided, the cost rises. However, the generator, in which the cost of the stator coil is a high proportion of the cost of the entire product, is greatly affected by the rise of stator coil cost as compared with other constituent products. If the film is increased in thickness, when the heat resistance to the film is improved with respect to the rise of temperature, the cost further increases.

Also in the case where the impregnated resin is coated thickly, needless to say, there are posed problems of an increase in material cost, an increase in production cost due to the increase of the steps, and the lowering of output due to the rise of temperature.

From F. Yeaple: "New designs for aluminum motors include fool-proof connectors", Product Engineering, vol. 45, no. 12, December 1974, pages 19-22 it is known to make stator windings of aluminum. Aluminum forms a tenaceous oxide that is highly stable and protective, but not always desirable. For example, aluminum is less conductive than copper and takes more space in the slots.

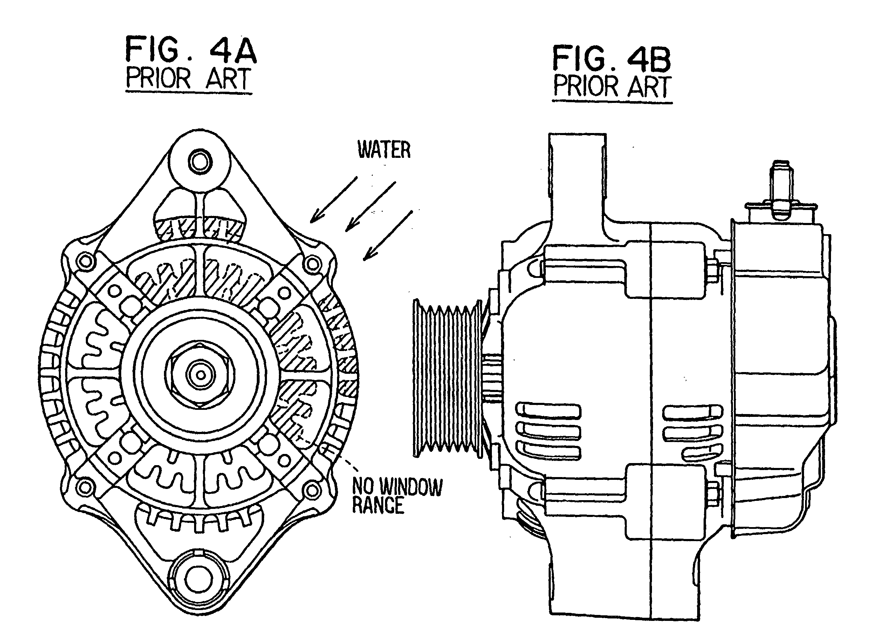

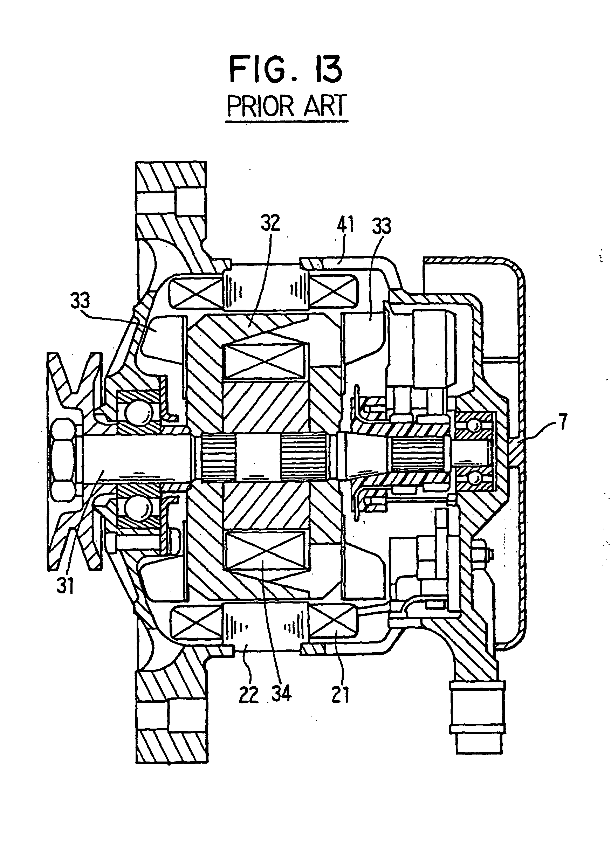

Further, in the method disclosed in JP 3-235644, in a recent small and high-output vehicular generator, a fan is provided on the side of a rotor, by rotation of which cooling air is taken therein, and a stator coil is cooled by utilizing air which is then discharged through a window 41 provided diametrically of a frame, as described in the embodiment shown in Fig. 13. That is, since the stator coil is positioned near the window for ventilation provided diametrically of the frame, water or salt water from the diametrical outside of the generator can easily reach the periphery of the stator. Therefore, it is contemplated that a drip-proof cover is also mounted externally of the window provided diametrically of the frame, or that those of the windows provided diametrically of the frame which are covered by water are blocked as shown in Figs. 4A and 4B. In any case, however, the ventilation resistance increases and the quantity of cooling air reduces, and an escape of hot air after heat generating parts such as a stator coil or a rectifier is impeded, resulting in raising considerably the temperature of the whole generator. Further, the addition of the drip proof cover increases materials and production cost due to an increase in number of parts.

The present invention solves the above-described problems. Starting out from JP 3-235 644. The object of the present invention is to provide an AC generator for vehicles which prevents corrosion caused by water-splashing from outside to achieve a long service life, is excellent in cost, is free from a new problem such as a rise of temperature, and can realize miniaturization and reduced weight.

### SUMMARY OF THE INVENTION

This object is solved by the subject matter of claim 1. According to the present invention, there is provided an AC generator in which an electric conductor of a stator coil is made of aluminum whereby even if salt water or the like is splashed on the generator, a conductive compound is not produced, and in which crossover portions of the electric conductor are spatially parted from one another to form cooling air passages which receive cooling air from an inner periphery of the stator whereby a sufficient cooling ventilation is secured not to lower output, and reduction in weight is achieved.

With the above-described arrangement, in the case where electrolytic water droplets containing salt or the like reach the stator coil, even if the electric conductor is encroached by corrosion, a conductive compound is not precipitated and produced because the electric conductor of the stator coil is made of aluminum. For this reason, even if the corrosion of the stator coil progresses due to the water-splashing onto the stator coil, it is possible to prevent a short-circuit between the coil and the stator core and between the coils. Thereby, it is possible to enlarge a sectional area of the electric conductor, that is, increase an occupied area ratio. Further, it is not necessary to block the frame window in the direction of water-splashing and the drip proof cover is not necessary. Since the plurality of windows can be provided substantially over the entire periphery in the outer diametrical direction of the crossover portion of the stator coil so that the ventilation path of cooling air can be sufficiently secured, no considerable rise in temperature of the whole generator occurs, and the stator coil can be sufficiently cooled. From the foregoing, the stator coil can be highly cooled, and the sectional area of the electric conductor can be enlarged, thus enabling the use of aluminum which is higher in intrinsic electric resistance as compared with copper. Further, it is not necessary to increase the physique in order to secure the output, and the reduction in weight can be realized due to a difference in specific gravity between copper and aluminum. Moreover, copper is replaced by aluminum whereby material cost can be considerably reduced, and it is not necessary to increase the thickness of the film, to thickly coat the impregnated resin, and to add the drip proof cover, thus enabling considerable reduction in cost.

The crossover portion of the stator coil is arranged so as to receive cooling air from the inner periphery of the stator. Since the drying of water-splashing to the crossover portion of the stator is accelerated, there is an effect of suppressing the progress of corrosion. Further, the increase in output caused by the lowering of temperature of the stator coil is enabled by air impinging on the crossover portion.

By providing the fan at least on one axial end of the rotor opposite to the stator, the quantity of air for discharging cooling air sucked from the axial outside in a diametrical direction can be increased to further enhance cooling of the stator coil made of aluminum material to increase the output.

In one embodiment of the AC generator in accordance with claim 1, an occupied area ratio of a sectional area of the electric conductor housed in the slot with respect to a sectional area of the slot of the stator is not less than 50% and less than 80%.

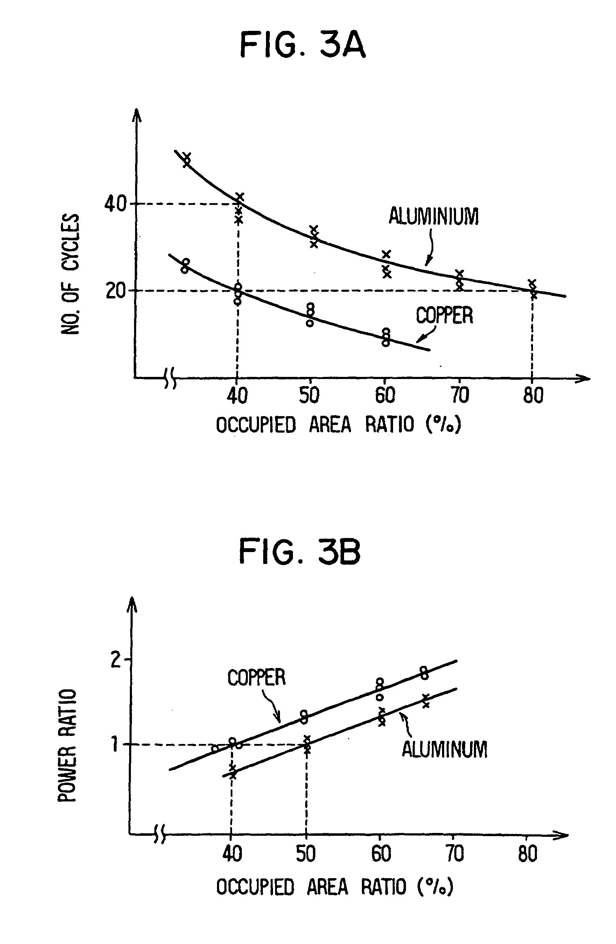

Conventionally, it is general that the occupied area ratio is about 40%. However, as shown in Fig. 3A, in the present invention in which the electric conductor is made of aluminum, the intrinsic electric resistance is higher than copper. However, as previously mentioned, the cooling property of the electric conductor is further improved by the reduction in resistance resulting from enlargement of sectional area of the conductor, the considerable enhancement of cooling performance -resulting from the securing of a cooling ventilation path, and the good heat transfer from the stator coil to the stator core resulting from enhancement of the occupied area ratio. Therefore, if the occupied area ratio is set to not less than 50%, the same output as the case where copper is used is obtained.

Further, in the case where the occupied area ratio is further increased, in the life test under the water atomization condition, in the conventional copper electric conductor, the damage produced in the insulating film in the step of inserting and mounting it on the stator slot increases, and a conductive compound is produced due to the corrosion from the portion to shorten the life. However, the electric conductor according to the invention is made of aluminum whereby the conductive compound due to the corrosion is not produced, thus securing the long service life. Fig. 3A shows the number of cycles till abnormality is generated in the test of applying a voltage to the stator coil under the salt water atomization condition in accordance with JIS-Z-2371. The abnormality in the conventional stator using copper for the electric conductor is due to poor pressure resistance caused by the short-circuit, whereas the abnormality of the present invention using aluminum for the electric conductor results from the fact that aluminum is dissolved out, and as a result, the electric conductor becomes narrowed and the electric resistance of the stator rises. In Fig. 3A, the case where the conventional electric conductor is made of copper and the occupied area ratio is 40%, the average number of cycles till trouble occurs is 20 cycles, but in the case where the electric conductor is made of aluminum, the occupied area ratio in which trouble occurs in 20 cycles is 80%.

According to the present invention, the occupied area ratio is not less than 50% but less than 80% to enable the provision of a generator which is excellent in output as well as in resistance to environmental effect as compared with prior art.

The electric conductor may have at least partly a substantially rectangular shape along the shape of the slot. Thereby, the occupied area ratio is raised to increase a sectional area of a winding, and as a result, the resistance of the winding can be reduced to enable higher output. Even though the occupied area ratio is not less than 50%, fabrication is easy, and the fabrication cost can be reduced.

The electric conductor may be divided into two layers, i.e., an outer layer positioned in an inner portion of the slot and an inner layer positioned at an inlet, wherein the conductors of the inner and outer layers of different slots are connected in series. Thereby, since the interference between different phases in the crossover portion of the electric conductor can be avoided, the electric conductor can be easily disposed in the inner part of the slot to achieve the higher output due to the higher space factor.

The electric conductor may be a bare conductor, and in the in-slot portions in the slots an electric insulating member may be provided between the contact surface and the core of the stator to insulate them from each other whereas in the crossover portion outside the slots, the electric conductors are spatially parted and insulated. Since the electric conductors are spatially parted in the crossover portion so that cooling air passes therethrough, thereby providing the effect in that the drying when water is splashed is accelerated to suppress the progress of corrosion, and the effect in that since cooling air impinges upon the electric conductors, heat radiation of the electric conductors without film is enhanced and the temperature of the stator coil is further lowered. Further, since the film is not present, the material cost can be further reduced, and in addition, the producing step of fabricating the conductors by a press can be considerably simplified and the lower cost can be achieved.

The electric conductor may comprise a plurality of substantially U-shaped conductor segments having straight line portions inserted into the slots, one side of the stator core consists of a turn portion of the U-shaped conductor segment, and other straight line portions are arranged and housed into the slots. With this arrangement, the electric connecting portions can be arranged on one side, and as such, the step of producing formation of a winding becomes easy.

The electric conductor of the inner and outer layers may comprise an internal conductor which is an in-slot portion inserted into the slot, and an external conductor extending to both sides of the internal conductor, the straight line portions of the internal conductor are arranged and housed in the slots. With this arrangement, the shape of the conductor segments is further simplified, whereby the step of fabricating the segment itself is easy, and inexpensive equipment can be employed therefor.

A pulley side end in an axial direction of the rotor opposite to the stator and an inner wall surface of an outer peripheral portion of a pulley side intake of the frame may be closely opposed to each other. With this arrangement, since the inner wall surface plays the role of a shroud of the fan, the fan performance of a pole core disk portion is increased, and the cooling performance can be similarly achieved and the cost can be reduced without increasing the number of parts and the number of processing steps as compared with the case where the cooling fans are provided on both sides.

Each of the electric conductor segments may have joint portions at opposite ends of the conductors adjacent to each other, wherein thickness after welding of said joint portion in both radial and circumferential directions is approximately equal to thickness before welding.

The joint portions adjacent to each other may be bare.

As described above, according to the present invention, it is possible to provide an AC generator for vehicles which can prevent corrosion due to water-splashing from outside, which produces no new problem such as a rise of temperature, which is excellent in terms of cost, and which can realize miniaturization and reduction in weight.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:
FIG. 1 is a sectional view of main parts of an AC generator for vehicles according to a first embodiment of the present invention;
FIG. 2 is a partial sectional view of a stator according to the first embodiment of the present invention;
FIG. 3A shows the results of a salt water atomization test with respect to an occupied area ratio, and FIG. 3B is a graph showing the results of a ratio of output to space factor;
FIGS. 4A and 4B show an example of a window blocking frame for shielding water-splashing in prior art, FIG. 4A being a front view, and FIG. 4B being a side view;
FIG. 5 is a partial sectional view of a stator in the case where a portion of a stator coil positioned within a slot has an substantially rectangular shape along the shape of the slot;
FIG. 6 is a perspective view of a segment in the case where the stator coil is not a continuous line but an substantially U-shaped conductor segment having a turn portion;
FIG. 7 is a schematic diagram of a joint portion of conductor segments ;
FIG. 8 is a side view of a stator having the substantially U-shaped conductor segment incorporated therein;
FIG. 9 is a perspective view of a stator having a conductor segment incorporated therein;
FIG. 10 is a perspective view of an example of another conductor segment;
FIG. 11 is a partial sectional view of a stator in the case where an electric conductor is a bare conductor;
FIG. 12 is a partial sectional view of an AC generator for cars in which a pole core disk portion is a cooling fan; and
FIG.13 is a sectional view showing an AC generator for cars having a conventional drip proof cover.

### DETAILED DESCRIPTION OF THE EMBODIMENTS

The AC generator for vehicles according to the present invention will be explained on the basis of the embodiments shown in the drawings.

### (First Embodiment)

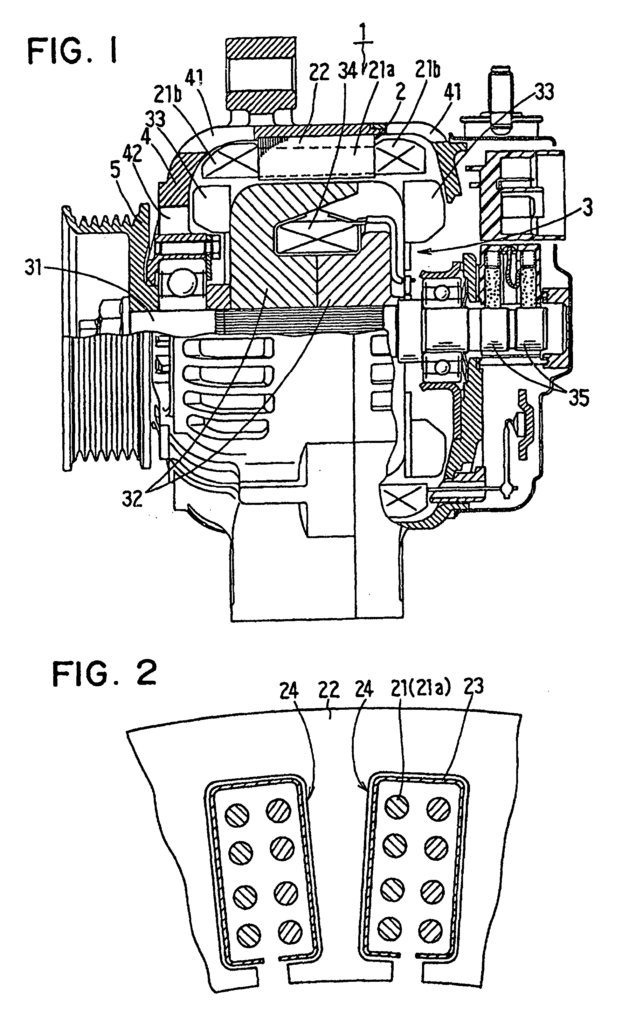

FIGS. 1 and 2 shows a first embodiment. FIG. 1 shows main parts of the AC generator for vehicles, for cars here, and FIG. 2 is a partial sectional view of a stator in the present embodiment.

An AC generator for vehicles 1 comprises a stator 2 as a armature, a rotor 3 as a field, and a frame 4 for supporting the rotor and the stator 2.

The rotor 3 rotates integral with a shaft 31 and is constituted by two sets of Lundell type pole cores 32, a cooling fan 33, a field coil 34, a slip ring 35, and so on. The shaft 31 is connected to a pulley 5 and rotatively driven by the engine (not shown) for running mounted on the car.

The frame 4 is provided with a discharge port 41 for cooling air positioned in the outer periphery opposed to a crossover portion 21b of a coil 21 of the stator 2, and an intake 42 on the axial end thereof. The stator 2 is constituted by a stator core 22, a stator coil 21 constituting a winding, an insulator 23 for electrically insulating between the stator core 22 and the stator coil 21, and is supported by the frame 4. The stator core 22 is formed from a laminate of thin steel sheets, and is formed in its inner peripheral surface with a plurality of slots 24 having an opening. A radially inner end opening of the slot 24 is set to be narrower than the distance between the sides of the slot 24 in a circumferential direction.

The stator coil 21 wound comprises an in-slot portion 21a housed in a slot 24, and a crossover portion 21b for connecting the in-slot portions. The material for the electric conductor used is aluminum, and the occupied area ratio is set to not less than 50% but not more than 80%.

FIG. 3A shows the results of a salt water atomization test in which the stator 2 of the same physique is varied in space factor. The test is conducted in a procedure such that a voltage of 12 V is applied between the stator coil 21 and the stator core 22 under the salt water condition in accordance with JIS-Z-2371 for a predetermined period of time, and after this, they are dried and insulation performance between the stator coil 21 and the stator core 22, and electric resistance of the stator coil 21 are measured. This procedure constitutes one cycle, which is repeated till an abnormality occurs. With respect to the insulation performance, AC 800 volt is applied between the stator coil 21 and the stator core 22 and between the coils for 5 seconds to examine the presence or absence of a short-circuit. Further, with respect to the electric resistance of the stator coil 21, an abnormality is determined to have occurred when the resistance is changed by not less than 5% with respect to the resistance before the test. As a result, as the occupied area ratio increases, the damage to the winding increases. Therefore, the conventional generator becomes abnormal in average 20 cycles, whereas in the present embodiment, even if the damage to the winding increases, a conductive compound is not produced. Therefore, the short-circuit abnormality will not occur between the conductor and the stator core 22 and between the conductors after the same number of cycles. The abnormal mode in which the electric resistance rises as the section reduces due to the progress of corrosion of aluminum itself occurs after 40 cycles. It has been found that the occupied area ratio in order to provide a life of more than 20 cycles can be increased to more than 80% compared to the 40% of the conventional products. FIG. 3B shows the output ratio in the case where in an AC generator for vehicles of the same physique, and at a number of revolutions, 4000 rpm, at which the temperature of the stator coil 21 is generally highest from the relationship between the output and the cooling performance of the fan, the saturation output value in the case where a conventional copper wire at an occupied area ratio of 40% is taken as 1, and the occupied area ratio is changed and the conductor is made of aluminum. In the case where the electric conductor is made of copper, the frame has no window over a circumferential range of approximately 120 degrees as shown in FIGs. 4A and 4B in order to prevent water-splashing from outside. In the case where the electric conductor is made of aluminum as in the present invention, a frame in which all the windows (41) are open is used. As can be seen from FIG. 3B, in the present embodiment, if the occupied area ratio is not less than 50%, an output similar to that of prior art can be obtained.

Since the fan 33 is mounted on the rotor 3, a large amount of air can be applied to the crossover portions 21b. Therefore, since the drying of water-splashing to the crossover portion 21b is accelerated, the progress of corrosion can be suppressed. Further, since air impinging on the crossover portion 21b accelerates cooling, it is possible to lower the temperature of the stator coil 21.

### (Second Embodiment)

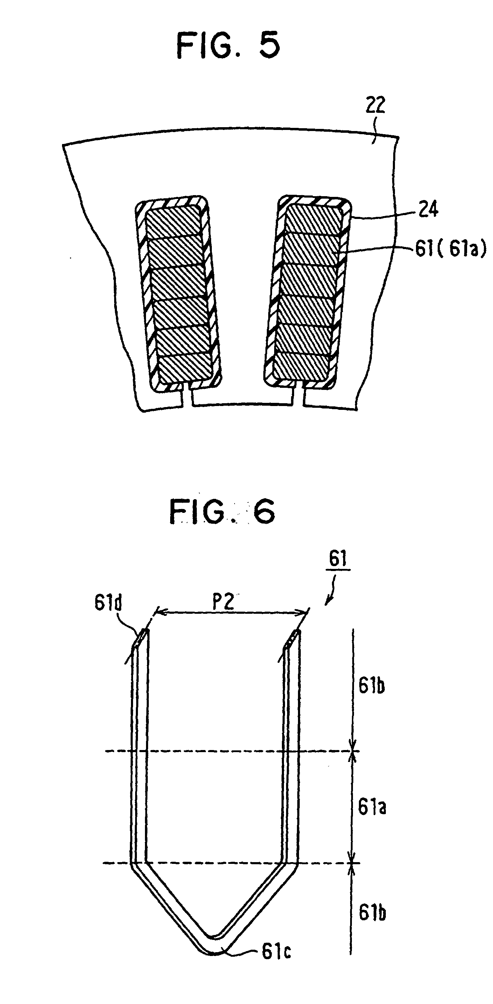

In the first embodiment, the stator coil 21 is indicated by circles (Fig. 2). However, if at least a portion positioned within the slot 24 is substantially rectangular in shape along the slot shape, as shown in FIG. 5, it is easier to increase the occupied area ratio to not less than 50%.

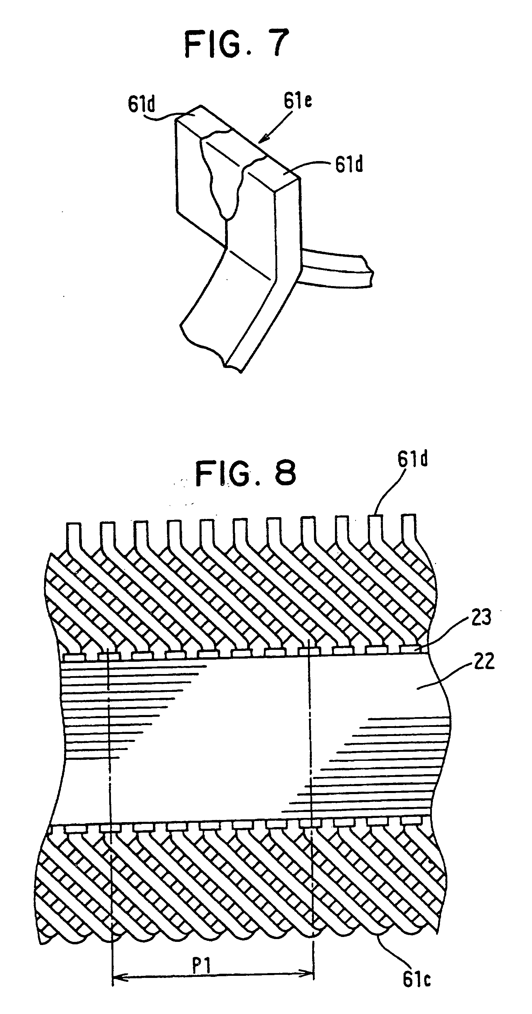

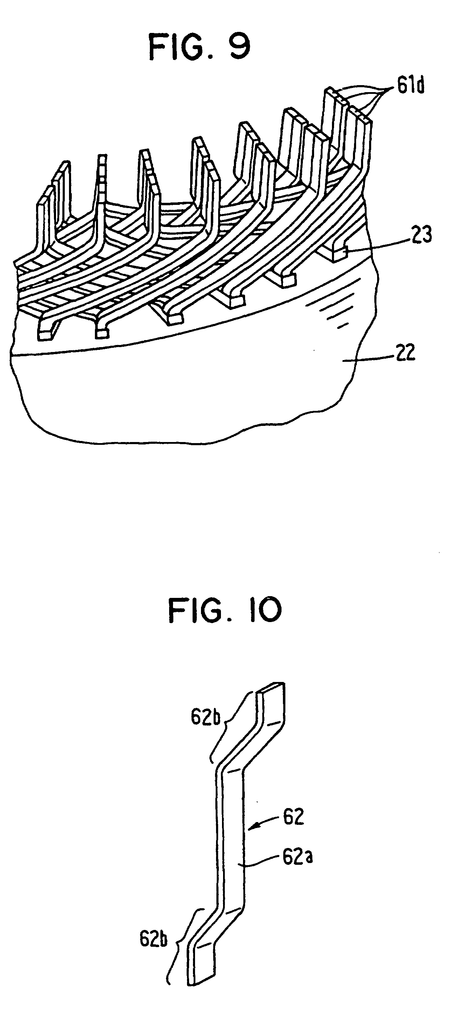

Further, the stator coil 21 is not a continuous wire, but a substantially U-shaped conductor segment 61 having a turn portion 61c is used as shown in FIG. 6. The conductor segment 61 comprises an in-slot portion 61a housed in the slot 24, and a crossover portion 61b for connecting the in-slot portions. In fabrication, a pitch P2 of the conductor segment 61 is adjusted, beforehand, to a predetermined magnetic pole pitch P1 of the stator slot 24 into which the segment 61 is inserted. The straight line portions 61a are inserted in the slots 24 of the stator core 22, and then, the portions of the conductor segment outside the slots 24 on the side opposite the turn portion 61c are bent so that one end 61d of one of the conductor segments 61 is connected to one end 61d of another of the conductor segments 61 to provide a winding as a whole. The connection of the ends 61d of the conductor segments 61 may be accomplished by electric conduction such as supersonic deposition, arc welding, and brazing, or mechanical processing means such as caulking. In the arc welding, because the melting point and also heat conductivity of the aluminum are lower than those of copper, the joint portion is specifically welded so that the surrounding portions may not be affected. As shown in Fig. 7, two ends 61d of the two conductor segments 61 are formed in parallel with each other, and the welded portion 61e is formed at the portion thereof adjacent to each other. Thus, the ends 61d after being welded maintains the original shape before being welded. That is, the ends have sharp corners. Therefore, it is easy to maintain the distance between the joint portions. In addition, the surface of aluminum joint portion is covered with aluminum oxide in the same manner as other aluminum portions. The aluminum oxide is an insulating material, and no specific insulator is necessary. Further, the electric conductor is divided into two layers, i.e., an outer layer positioned in the inner part of the slot 24 and an inner layer positioned at an inlet, at least a pair of which are disposed, and the conductors of the inner and outer layers of different slots are connected in series. Interference between different phases in the crossover portion of the electric conductor can be avoided, as shown in FIG. 10.

As described above, since the conductor segment 61 can be easily disposed in the inner part of the slot 24, the occupied area ratio can be made higher within the slot 24 easily. FIG. 9 shows the case where the number of conductors per slot is four turns, that is, the outer layer and inner layers are two pairs so that joint portions are close to each other. In order to insulate one from another, aluminum welding is preferable. As shown in Fig. 9, even if the number of pairs is changed, the interference between different phases can be similarly avoided. Further, the winding is divided into conductor segments 61 whereby the conductor section is easily formed into a rectangle. Since the conductor can be prepared by a press or the like, materials and processing cost can be reduced.

Because the specific gravity of iron, which is the material of the stator core, and that of copper, which is the material of the stator coil, is almost equal, it is difficult to separate them if they are melted. However, the specific gravity of aluminum is about one third of that of iron, and the separation of aluminum from iron is easy if they are melted. This is a merit for material recycling.

### (Variants)

While in the second embodiment, the turn portion 61c of the conductor segment 61 is provided on one side of the stator, it is noted that this may be divided, and both sides may be joined by welding or the like. A conductor segment 62 in this case is shown in FIG. 10. The conductor segment 62 comprises an in-slot portion 62a which is a substantially straight line portion to be inserted into the slot 24, and a crossover portion 62b which is a substantially straight line portion extending to both axial sides of the stator core 22 on both sides of the internal conductor, the crossover portion 62b having an angle and a length around the distance about half of the magnetic pole pitch. Also in this case, the occupied area ratio within the slot 24 can be easily raised of course, and this can be simplified as compared with the substantially U-shape of the conductor segment 61, thus making the manufacturing step of the segment itself easy, and enabling fabrication with an inexpensive equipment.

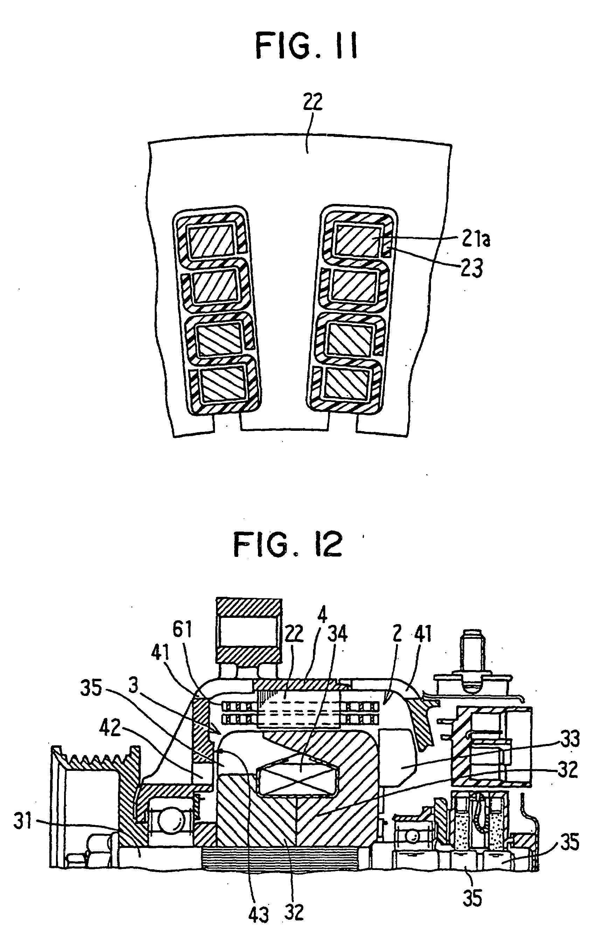

Alternatively, a bare conductor without film is used as an electric conductor, and as shown in FIG. 11, in the in-slot portion 21a within the slot 24, an electric insulating member 23 is disposed between the contact surface of the electric conductor and the stator core 22 to insulate them, and in the crossover portion outside the slot 24, the electric conductors are spatially parted to insulate between the conductors. At this time, since the cooling air passes through the space of the crossover portion, drying in case of water-splashing is further accelerated to suppress the progress of corrosion, and since cooling air impinges upon the electric conductor, the heat radiation of the electric conductors without the film as well as the cooling properties of the electric conductors are further improved. Further, since no film is provided, the material cost can be further reduced. The conductor can be fabricated by a press of course, and since no scratch of film is produced, the production step can be considerably simplified and the cost can be lowered.

Furthermore, the electric conductor may be of a composite conductor of a rectangular conductor and a round wire. For example, in the case where the portion inside the slot 24 is a rectangular conductor and the portion outside the slot 24 is a round wire, the effect of improvement in cooling performance caused by higher space factor in the slot 24 and enhancement of heat transfer to the stator core 22 is similarly obtained. Conversely, if the portion inside the slot 24 is a round wire, and the portion outside the slot 24 is a rectangular and substantially flat conductor, a clearance between the conductors in the coil ends can be sufficiently secured, and the ventilation resistance to cooling air can be reduced to enhance the cooling performance.

Alternatively, as shown in FIG. 12, the inner wall surface 43 in the outer peripheral portion of the intake 42 of the frame is made close to and opposed to the end of the rotor at which a cooling fan of the rotor is not installed. In this case, since the inner wall surface 43 of the frame plays the role of a shroud of a fan, the fan performance of the pole core disk portion 32 is improved. Thereby, as compared with the case where cooling fans are provided on both sides, the cooling performance can be equally achieved without increasing the number of parts and the number of processing steps, and the generator can be further miniaturized.

According to the embodiments described above, it is possible to provide an AC generator for vehicles which can prevent corrosion due to water-splashing from outside, which produces no new problem such as a rise of temperature, which is excellent in terms of cost, and which can realize miniaturization and reduction in weight.

In the foregoing description of the present invention, the invention has been disclosed with reference to specific embodiments thereof. It will, however, be evident that various modifications and changes may be made to the specific embodiments of the present invention without departing from the scope of the invention as set forth in the appended claims. Accordingly, the description of the present invention in this document is to be regarded in an illustrative, rather than restrictive, sense.

## Claims

1. An AC generator (1) for vehicles including a field rotor (3) having a cooling fan (33) on an axial end thereof; a stator (2) having a laminated core (22) with a plurality of slots (24), a plurality of electric conductor segments (61, 62) inserted in the slots (24) and an electric insulator (23) and disposed around said field rotor (3); and a frame (4) for supporting the rotor (3) and the stator (2), wherein
each of said electric conductor segments (61, 62) is composed of an in-slot portion (21a) disposed in one of said slots (24) and a crossover portion (21b) for connecting said in-slot portion (21a) to another in-slot portion (21a) of said conductor segments (61, 62) disposed in another of said slots (24) to provide a winding as a whole,
said frame (4) is disposed around said crossover portion (21b) of the electric conductor segments (61, 62), and
portions of said frame (4) substantially in an outer diametrical direction opposite to said crossover portion (21b) have a plurality of windows (41) substantially in a whole periphery thereof, **characterized in that**
each of said electric conductor segments (61, 62) is made of aluminum, and
said crossover portions (21b) are spatially parted from one another to form cooling air passages which receive cooling air from an inner periphery of said stator (2).

2. An AC generator (1) for vehicles according to claim 1, wherein an occupied area ratio of a sectional area of each of said in-slot portion of said electric conductor segments (61, 62) with respect to a sectional area of said slot (24) is less than 80% and not less than 50%.

3. An AC generator (1) for vehicles according to claim 1 or 2, wherein said in-slot portions (21a) of said electric conductor segments (61, 62) have each a substantially rectangular shape fitting to the shape of said slots (24).

4. An AC generator (1) for vehicles according to any one of claims 1-3, wherein said electric conductor segments (61, 62) are divided into two layers, outer layers which are disposed in an inner portion of said slots (24) and inner layers which are disposed at inlets of said slots (24), wherein each of said conductor segments in said inner portion of one slot (24) is connected to one of said conductor segments (61, 62) at said inlets of another slot (24) to form a series coil winding.

5. An AC generator (1) for vehicles according to any one of claims 1-4, wherein each of said electric conductor segments (61, 62) comprises a naked conductor, and
an electric insulating member (23) is interposed between said conductor segments (61, 62) in said in-slot portions (21a) as well as between inner walls of said slot (24) and said electric conductor segments (61, 62).

6. An AC generator (1) for vehicles according to any one of claims 3-5, wherein
each of said electric conductor segments (61) comprises a U-shaped conductor segment and said in-slot portion (21a) comprises parallelly extending straight portions.

7. An AC generator (1) for vehicles according to any one of claims 3-5, wherein
each of said electric conductor segments (61, 62) disposed in said inner and outer layers comprises internal conductors which are disposed in said slots (24), and external conductors extending from both sides of said internal conductors.

8. An AC generator (1) for vehicles according to any one of claims 4-7, wherein a pulley side portion of said rotor (3) and a peripheral portion (43) of said frame (4) having air-intakes (42) are disposed closely to each other.

9. An AC generator (1) for vehicles according to claim 6 or 7, wherein each of said electric conductor segments (61, 62) has joint portions at opposite ends of said conductors adjacent to each other, and
thickness after welding of said joint portion in both radial and circumferential directions is approximately equal to thickness before welding.

10. An AC generator (1) for vehicle according to claim 9, wherein
said joint portions adjacent to each other are bare.

## Patentansprüche

1. Ein Wechselstrom-Generator (1) für Fahrzeuge umfassend einen Feld-Rotor (3), der an seinem einen axialen Ende einen Kühl-Ventilator (33) aufweist; einen Stator (2), der einen laminierten Kern (22) mit einer Mehrzahl von Schlitzen (24), eine Mehrzahl elektrischer Leiter-Abschnitte (61, 62), die in die Schlitze (24) und einen elektrischen Isolator (23) eingesetzt sind und die um den Feld-Rotor (3) angeordnet sind; und einen Rahmen (4), um den Rotor (3) und den Stator (2) zu halten, wobei
jeder der elektrischen Leiter-Abschnitte (61, 62) zusammengesetzt ist aus einem Innen-Schlitz-Teil (21a), der in einem der Schlitze (24) angeordnet ist, und einem Überbrückungs-Teil (21b), um das Innen-Schlitz-Teil (21a) mit einem anderen Innen-Schlitz-Teil (21a) der Leiter-Abschnitte (61, 62), der in einem anderen Schlitz (24) angeordnet ist, zu verbinden, um so insgesamt eine Wicklung zu bilden,
der Rahmen (4) den Überbrückungs-Teil (21b) der elektrischen Leiter-Abschnitte (61, 62) umgibt, und
Teile des Rahmens (4), die in Richtung des Außendurchmessers dem Überbrückungs-Teil (21b) und im Wesentlichen gegenüber liegen, im Wesentlichen in ihrem Gesamtumfang eine Mehrzahl von Fenstern aufweisen,
**dadurch gekennzeichnet, dass** jeder der elektrischen Leiter-Abschnitte (61, 62) aus Aluminium besteht, und
die Überbrückungs-Teile (21b) räumlich voneinander getrennt sind, um Kühlluft-Passagen zu bilden, die von einem Innenumfang des Stators (2) Kühlluft aufnehmen.

2. Ein Wechselstrom-Generator (1) für Fahrzeuge nach Anspruch 1, wobei
das Verhältnis des beanspruchte Raums einer Querschnittsfläche jedes der Innen-Schlitz-Teile (21a) der elektrischen Leiter-Abschnitte (61, 62) zu der Querschnittsfläche der Schlitze (24) weniger als 80 %, aber nicht weniger als 50 % beträgt.

3. Ein Wechselstrom-Generator (1) für Fahrzeuge nach Anspruch 1 oder 2, wobei
die Innen-Schlitz-Teile (21a) der elektrischen Leiter-Abschnitte (61, 62) jeweils eine im Wesentlichen rechtwinklige Form haben, die zur Form der Schlitze (24) passt.

4. Ein Wechselstrom-Generator (1) für Fahrzeuge nach einem der Ansprüche 1 - 3, wobei
die elektrischen Leiter-Abschnitte (61, 62) in zwei Schichten geteilt sind, äußere Schichten, die im Innenteil der Schlitze (24) angeordnet sind, und innere Schichten, die an Einlässen der Schlitze (24) angeordnet sind, wobei jeder der Leiter-Abschnitte im Innenteil eines Schlitzes (24) mit einem der Leiter-Abschnitte (61, 62) an den Einlässen eines anderen Schlitzes (24) verbunden ist, um eine serielle Spulenwicklung zu bilden.

5. Ein Wechselstrom-Generator (1) für Fahrzeuge nach einem der Ansprüche 1 - 4, wobei
jeder der elektrischen Leiter-Abschnitte (61, 62) einen freiliegenden Leiter aufweist, und
ein elektrisches Isolier-Element (23), das sowohl zwischen den Leiter-Abschnitten (61, 62) in den Innen-Schlitz-Teilen (21a), als auch zwischen inneren Wänden des Schlitzes (24) und den elektrischen Leiter-Abschnitten (61, 62) angeordnet ist.

6. Ein Wechselstrom-Generator (1) für Fahrzeuge nach einem der Ansprüche 3 - 5, wobei
jeder der elektrischen Leiter-Abschnitte (61, 62) einen U-förmigen Leiter-Abschnitt aufweist, und die Innen-Schlitz-Teile (21a) teilweise parallel erstreckende gerade Abschnitte aufweisen.

7. Ein Wechselstrom-Generator (1) für Fahrzeuge nach einem der Ansprüche 3 - 5, wobei
jeder der elektrischen Leiter-Abschnitte (61, 62), der an den inneren und äußeren Schichten angeordnet ist, innere Leiter aufweist, die in den Schlitzen (24) angeordnet sind, und externe Leiter, die sich von beiden Seiten der inneren Leiter erstrecken.

8. Ein Wechselstrom-Generator (1) für Fahrzeuge nach einem der Ansprüche 4 - 7, wobei
der Riemenscheiben-seitige Teil des Rotors (3) und ein Umfangsteil (43) des Rahmens (4) Lufteinlässe (42) aufweisen, die nahe aneinander liegen.

9. Ein Wechselstrom-Generator (1) für Fahrzeuge nach einem der Ansprüche 6 oder 7, wobei
jeder der elektrischen Leiter-Abschnitte (61, 62) Verbindungsabschnitte an gegenüberliegenden Enden der benachbarten Leiter aufweist, und
die Dicke nach dem Schweißen des Verbindungsabschnitts in radialen- als auch Umfangs- Richtungen die ungefähr gleiche Dicke aufweist wie vor dem Schweißen.

10. Ein Wechselstrom-Generator (1) für Fahrzeuge nach Anspruch 9, wobei
die einander benachbarten Verbindungsabschnitte unbedeckt sind.

## Revendications

1. Alternateur (1) pour véhicules automobiles incluant un rotor de champ (3) ayant un ventilateur de refroidissement (33) sur une extrémité axiale de ce dernier ; un stator (2) ayant un noyau stratifié (22) avec une pluralité d'encoches (24), une pluralité de segments conducteurs électriques (61, 62) insérés dans les encoches (24) et un isolateur électrique (23) et disposés autour dudit rotor de champ (3) ; et un bâti (4) pour supporter le rotor (3) et le stator (2), dans lequel
chacun desdits segments conducteurs électriques (61, 62) est composé d'une portion intérieure d'encoche (21a) disposée dans une desdites encoches (24) et une portion de recouvrement (21b) pour connecter ladite portion intérieure d'encoche (21a) à une autre portion intérieure d'encoche (21a) desdits segments conducteurs (61, 62) disposés dans une autre desdites encoches (24) afin de constituer un enroulement dans l'ensemble,
ledit bâti (4) est disposé autour de ladite portion de recouvrement (21b) des segments conducteurs électriques (61, 62), et
les portions dudit bâti (4) essentiellement dans une direction diamétralement extérieure opposée à ladite portion de recouvrement (21b) ont une pluralité de fenêtres (41) essentiellement sur l'ensemble de la périphérie de ce dernier, **caractérisé en ce que**
chacun desdits segments conducteurs électriques (4) est constitué d'aluminium, et
lesdites portions de recouvrement (21b) sont séparées par un espace l'une de l'autre afin de former des passages d'air refroidissant qui reçoivent l'air refroidissant depuis une périphérie extérieure du dit stator (2).

2. Alternateur (1) pour véhicules automobiles selon la revendication 1, dans lequel un rapport de zone occupée d'une section de chacune desdites portions intérieures d'encoche desdits segments conducteurs électriques (61, 62) par rapport à une section de ladite encoche (24) est inférieur à 80 % et n'est pas inférieur à 50 %.

3. Alternateur (1) pour véhicules automobiles selon la revendication 1 ou 2, dans lequel chacune desdites portions intérieures d'encoche (21a) desdits segments conducteurs électriques 61, 62) ont chacune une forme essentiellement rectangulaire qui s'ajuste à la forme desdites encoches (24).

4. Alternateur (1) pour véhicules automobiles selon l'une quelconque des revendications 1 à 3, dans lequel lesdites segments conducteurs électriques (61, 62) sont divisés en deux couches, les couches extérieures qui sont disposées sur une portion intérieure desdites encoches (24) et les couches intérieures qui sont disposées aux admissions desdites encoches (24), dans lequel chacun desdits segments conducteurs dans ladite portion intérieure d'une encoche (24) est connecté à l'un desdits segments conducteurs (61, 62) aux dites admissions de l'autre encoche (24) afin de former une série d'enroulements de bobine.

5. Alternateur (1) pour véhicules automobiles selon l'une quelconque des revendications 1 à 4, dans lequel chacun desdits segments conducteurs électriques (61, 62) comprend un conducteur nu, et
un élément d'isolation électrique (23) est interposé entre lesdits segments conducteurs (61, 62) dans lesdites portions intérieures d'encoche (21a) ainsi que entre les parois intérieures de ladite encoche (24) et lesdits segments conducteurs électriques (61, 62).

6. Alternateur (1) pour véhicules automobiles selon l'une quelconque des revendications 3 à 5, dans lequel
chacun desdits segments conducteurs électriques (61) comprend un segment conducteur en forme de U et ladite portion intérieure d'encoche (21a) comprend les portions s'étendant en lignes droites parallèles.

7. Alternateur (1) pour véhicules automobiles selon l'une quelconque des revendications 3 à 5, dans lequel
chacun desdits segments conducteurs électriques (61, 62) disposés sur lesdites couches intérieures et extérieures comprend des conducteurs internes qui sont disposés dans lesdites encoches (24) et des conducteurs externes qui s'étendent sur les deux côtés desdits conducteurs internes.

8. Alternateur (1) pour véhicules automobiles selon l'une quelconque des revendications 4 à 7, dans lequel une portion à poulie dudit rotor (3) et une portion périphérique (43) dudit bâti (4) ayant des admissions d'air (42) sont disposées l'une près de l'autre.

9. Alternateur (1) pour véhicules automobiles selon la revendication 6 ou 7, dans lequel chacun desdits segments conducteurs électriques (61, 62) a des portions soudées aux extrémités opposées desdits conducteurs adjacents l'un à l'autre, et
l'épaisseur après la soudure desdites portions soudées dans les directions radiales et circonférentielles est approximativement égale à l'épaisseur avant soudure.

10. Alternateur (1) pour véhicules automobiles selon la revendication 9, dans lequel
lesdites portions soudées adjacentes l'une à l'autre sont nues.
